(19) Europäisches Patentamt / European Patent Office / Office européen des brevets

(11) **EP 4 131 544 B1**

(12) **EUROPEAN PATENT SPECIFICATION**

(45) Date of publication and mention
of the grant of the patent:
**05.11.2025   Bulletin 2025/45**

(21) Application number: **21781163.7**

(22) Date of filing: **18.03.2021**

(51) International Patent Classification (IPC):
*H01B 1/20* $^{(2006.01)}$    *H01M 10/052* $^{(2010.01)}$
*H01M 10/0562* $^{(2010.01)}$    *H01M 10/0565* $^{(2010.01)}$
*H01M 10/0585* $^{(2010.01)}$    *H01M 4/13* $^{(2010.01)}$
*H01M 4/62* $^{(2006.01)}$    *H01M 10/056* $^{(2010.01)}$
*H01M 10/42* $^{(2006.01)}$    *H01M 10/0525* $^{(2010.01)}$
*H01M 50/414* $^{(2021.01)}$    *H01M 50/423* $^{(2021.01)}$
*H01M 50/434* $^{(2021.01)}$    *H01M 50/446* $^{(2021.01)}$
*H01M 50/497* $^{(2021.01)}$    *H01B 1/08* $^{(2006.01)}$
*H01M 10/058* $^{(2010.01)}$

(52) Cooperative Patent Classification (CPC):
**H01B 1/08; H01B 1/20; H01M 4/628; H01M 10/052;
H01M 10/0562; H01M 10/0565; H01M 10/058;**
Y02E 60/10; Y02P 70/50

(86) International application number:
**PCT/JP2021/011144**

(87) International publication number:
**WO 2021/200229 (07.10.2021 Gazette 2021/40)**

(54) **SOLID ELECTROLYTE-CONTAINING LAYER**

FESTELEKTROLYT ENTHALTENDE SCHICHT

COUCHE CONTENANT UN ÉLECTROLYTE SOLIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2020   JP 2020063857**

(43) Date of publication of application:
**08.02.2023   Bulletin 2023/06**

(73) Proprietor: **Sumitomo Chemical Company,
Limited
Tokyo 103-6020 (JP)**

(72) Inventors:
• **SUZUKI, Junji**
**Osaka-shi, Osaka 554-8558 (JP)**
• **MURAKAMI, Chikara**
**Niihama-shi, Ehime 792-8521 (JP)**
• **HASHIWAKI, Hiroki**
**Niihama-shi, Ehime 792-0015 (JP)**

(74) Representative: **Vossius & Partner
Patentanwälte Rechtsanwälte mbB
Siebertstraße 3
81675 München (DE)**

(56) References cited:
**EP-A1- 3 389 129    WO-A1-2019/093461
JP-A- 2003 338 321    JP-A- 2019 179 602
JP-A- 2019 505 961    JP-A- 2020 009 548**

**Description**

Technical Field

The present invention relates to a solid electrolyte-containing layer. The present invention relates also to an all-solid-state secondary battery and a method for producing the same, a short circuit prevention layer, and a method for preventing a short circuit in the all-solid-state secondary battery.

Background Art

An all-solid-state secondary battery is a secondary battery in which a solid electrolyte is employed as an electrolyte. Solid electrolytes fall roughly into an inorganic solid electrolyte and an organic solid electrolyte. In order for both of the inorganic and organic solid electrolytes to be put into practical use, research and development is proceeding. Patent Literature 1 provides an example of an all-solid-state secondary battery in which an inorganic solid electrolyte is used. Patent Literature 2 provides an example of an all-solid-state secondary battery in which an organic solid electrolyte is used. Patent Literature 3 discloses a solid electrolyte composition comprising: an inorganic solid electrolyte having conductivity for ions of metal elements belonging to Group I or II of the periodic table; binder particles which have an average particle diameter of 10 nm or more and 50,000 nm or less and encompass an ion-conductive substance; and a dispersion medium.

Citation List

[Patent Literature]

[Patent Literature 1] Japanese Patent Application Publication, Tokukai, No. 2019-199394
[Patent Literature 2] Japanese Patent Application Publication, Tokukai, No. 2019-102301
[Patent Literature 3] International Patent Application WO 2017/099248 A1

Summary of Invention

Technical Problem

The above related art has room for further improvement of prevention of a short circuit between electrodes caused by a dendrite.
An object of an aspect of the present invention is to provide a solid electrolyte-containing layer capable of preventing a short circuit caused by the formation of a dendrite.

Solution to Problem

The inventors of the present invention found that the above object can be attained by applying a heat-resistant resin having ion conductivity to an all-solid-state secondary battery. Specifically, the present invention includes the following configurations.

<1> A solid electrolyte-containing layer including: a solid electrolyte; and a heat-resistant resin having ion conductivity.
<2> The solid electrolyte-containing layer described in <1> in which: the solid electrolyte-containing layer includes a solid electrolyte layer containing the solid electrolyte and includes a resin layer containing the heat-resistant resin having ion conductivity; and the solid electrolyte layer and the resin layer are adjacent to each other.
<3> The solid electrolyte-containing layer described in <1> or <2> in which the heat-resistant resin having ion conductivity has a glass-transition temperature of not less than 200°C.
<4> The solid electrolyte-containing layer described in any one of <1> to <3> in which the solid electrolyte is an inorganic solid electrolyte.
<5> An all-solid-state secondary battery including: a positive electrode; the solid electrolyte-containing layer described in any one of <1> to <4>; and a negative electrode.
<6> A method for producing an all-solid-state secondary battery, the method including the step of disposing, between a positive electrode and a negative electrode, the solid electrolyte-containing layer described in any one of <1> to <4>.
<7> A short circuit prevention layer for an all-solid-state secondary battery, the short circuit prevention layer including a

2

heat-resistant resin having ion conductivity.

<8> A method for preventing a short circuit in an all-solid-state secondary battery, the method including disposing, between a positive electrode and a negative electrode, the solid electrolyte-containing layer described in any one of <1> to <4>.

Advantageous Effects of Invention

With an aspect of the present invention, it is possible to provide a solid electrolyte-containing layer capable of preventing a short circuit caused by the formation of a dendrite.

Brief Description of Drawings

Fig. 1 is a schematic diagram of a configuration of an all-solid-state secondary battery in accordance with an aspect of the present invention.

Fig. 2 is a schematic diagram of a configuration of an all-solid-state secondary battery in accordance with another aspect of the present invention.

Description of Embodiments

The following description will discuss embodiments of the present invention in detail. However, the present invention is not limited thereto.

As used herein, a numerical range expression "A to B" means "not less than A and not more than B" unless otherwise noted.

[1. Heat-resistant resin having ion conductivity]

The solid electrolyte-containing layer in accordance with an aspect of the present invention includes a heat-resistant resin having ion conductivity. Prior to descriptions of solid electrolyte-containing layers 50a and 50b, a heat-resistant resin having ion conductivity will be described.

As used herein, the term "heat-resistant resin" refers to a resin that does not soften, melt, or pyrolyze under a high-temperature environment. Here, the "high-temperature environment" refers to an environment where the temperature is 150°C. The heat-resistant resin having ion conductivity has a glass-transition temperature preferably of not less than 200°C, more preferably of not less than 250°C, and even more preferably of not less than 300°C. Such a resin does not soften, melt, or pyrolyze even when all-solid-state secondary batteries 100a and 100b are used while being warmed without use of a cooling system.

As used herein, the phrase "having ion conductivity" means that an ion conductivity at 80°C is not less than $1 \times 10^{-10}$ S/cm. The lower limit of the ion conductivity is preferably not less than $1 \times 10^{-9}$ S/cm, and more preferably not less than $1 \times 10^{-8}$ S/cm. The upper limit of the ion conductivity is, for example, not more than $1 \times 10^{-1}$ S/cm. The upper limits and the lower limits of the ion conductivity may be combined. As a result of the combination, examples of the range of the ion conductivity include: not less than $1 \times 10^{-10}$ S/cm and not more than $1 \times 10^{-1}$ S/cm; not less than $1 \times 10^{-9}$ S/cm and not more than $1 \times 10^{-1}$ S/cm; and not less than $1 \times 10^{-8}$ S/cm and not more than $1 \times 10^{-1}$ S/cm. In an embodiment, the above ion conductivity is an ion conductivity of a lithium ion.

Examples of a method for measuring the ion conductivity (e.g., lithium ion conductivity) of the heat-resistant resin having ion conductivity include a method in which an impedance method is used (for details, see the following description). A measurement sample to be used for the measurement can be prepared by, for example, drying an appropriate base material (e.g., a polyethylene film) having been impregnated with a solution of the heat-resistant resin having ion conductivity.

1. A coin-type lithium battery CR2032 (which can be hereinafter referred to as a coin cell) is prepared by sandwiching the measurement sample between two blocking electrodes (e.g., electrodes made of SUS) in a dry argon atmosphere in a glove box.

2. A coin cell thereby obtained is conditioned in a thermostatic chamber at 80°C for 12 hours.

3. Measurement is carried out by using an impedance measuring device at a desired temperature, for frequencies ranging from 0.1 Hz to 1 MHz and an amplitude of 10 mV. An ion electrical conductivity $\sigma$ is calculated from the following formula:

$$\sigma \ (S \cdot cm^{-1}) = t \ (cm) \times R \ (\Omega) \ / \ A \ (cm^2)$$

In this formula, R represents the value of an impedance. A represents the area of a sample, and t represents the thickness of the sample.

It should be noted that the "heat-resistant resin having ion conductivity" herein differs from a "mixture of a heat-resistant resin which does not have ion conductivity and an ion-conductive material". The heat-resistant resin having ion conductivity is such that the molecule of the heat-resistant resin has ion conductivity in itself.

By introducing an appropriate functional group into a heat-resistant resin which does not have ion conductivity, such a heat-resistant resin can be used as a resin having ion conductivity. In an embodiment, the heat-resistant resin having ion conductivity is a heat-resistant resin which contains functional groups having an anion and is a resin in which at least some atoms of the main chain of the heat-resistant resin are substituted by the functional groups having an anion. The heat-resistant resin having ion conductivity may contain a functional group having two or more kinds of anions.

Examples of the functional group having an anion include a sulfonate group ($-SO_3^-$), a carboxylate group ($-COO^-$), a phosphonate group ($-PO_3^-$), and a trifluoroborate group ($-BF_3^-$). These functional groups may have an alkyl chain having approximately 1 to 20 carbon atoms. Specifically, examples of the functional group having an anion also include an alkyl sulfonate group ($-C_nH_{2n}SO_3^-$), an alkyl carboxylate group ($-C_nH_{2n}COO^-$), an alkyl phosphonate group ($-C_nH_{2n}PO_3^-$), and an alkyl trifluoroborate group ($-C_nH_{2n}BF_3^-$ group) (in each of the formulae, n represents an integer of 1 to 20). The functional group having an anion may be contained at the end of the alkyl chain, or may be contained along the chain.

The functional group having an anion is contained in the heat-resistant resin having ion conductivity in an amount preferably of 1 mol% to 99 mol% and more preferably of 10 mol% to 80 mol%, where the total amount of atoms in the heat-resistant resin that can be substituted by the above-described functional group is regarded as 100 mol%.

For example, when a polyamide is the resin substituted by the functional group, the amount of the functional groups having an anion is preferably 1 mol% to 99 mol% and more preferably 10 mol% to 80 mol%, where the total amount of hydrogen atoms in the amide groups of the polyamide is regarded as 100 mol%.

The heat-resistant resin having ion conductivity may have an alkylene oxide structure ($-(C_xH_{2x}O)_Y-$; where X represents an integer of 1 to 20, preferably of 1 to 10, and more preferably of 1 to 3; and Y represents an integer of 1 to 20 and preferably of 1 to 10). The heat-resistant resin having ion conductivity may contain an alkylene oxide structure as a main chain or as a side chain. However, when the proportion of the alkylene oxide structures contained in the heat-resistant resin having ion conductivity is large, the glass-transition temperature of the resin decreases and the heat resistance of the resin could therefore decrease. For this reason, the amount of the alkylene oxide structures contained in the heat-resistant resin having ion conductivity is preferably not less than 10 mol% and not more than 80 mol%, where the total amount of atoms that can be substituted by the alkylene oxide structures contained in the heat-resistant resin is regarded as 100 mol%.

Examples of the heat-resistant resin include polyamide, polyimide, polyamide imide, polycarbonate, polyacetal, polysulfone, polyphenylene sulfide, polyether ether ketone, aromatic polyester, polyether sulfone, polyetherimide, cellulose ethers, polybenzimidazole, polyurethane, and melamine resin. One of these heat-resistant resins may be used alone, or a mixture of two or more of these heat-resistant resins may be used.

From the viewpoint of possession of higher heat resistance, the heat-resistant resin is preferably a polyamide, a polyimide, a polyamide imide, an aromatic polyester, a polyether sulfone, or polyetherimide, and more preferably a polyamide, a polyimide, or a polyamide imide. Among a polyamide, a polyimide, and a polyamide imide, a nitrogen-containing aromatic polymer is more preferable from the viewpoint of heat resistance. Examples of the nitrogen-containing aromatic polymer include an aromatic polyamide (a para-oriented aromatic polyamide, a meta-oriented aromatic polyamide, etc.), an aromatic polyimide, and an aromatic polyamide imide. Among these nitrogen-containing aromatic polymers, an aromatic polyamide is more preferable and a para-oriented aromatic polyamide is particularly preferable. As used herein, an aromatic polyamide can be expressed as an "aramid" and a para-oriented aromatic polyamide can be expressed as a "para-aramid".

A para-aramid is a heat-resistant resin obtained by condensation polymerization of a para-oriented aromatic diamine and a para-oriented aromatic dicarboxylic acid halide. Repeating units that constitute a substantial portion of a para-aramid each have amide bonds at para positions of an aromatic ring. Alternatively, the repeating unit has amide bonds at quasi-para positions of an aromatic ring. Note that having amide bonds at the quasi-para positions of an aromatic ring indicates that two amide bonds extending from the aromatic ring are located in the same straight line or to be parallel to each other.

Specific examples of the para-aramid include poly(paraphenylene terephthalamide), poly(parabenzamide), poly(4,4'-benzanilide terephthalamide), poly(paraphenylene-4,4'-biphenylene dicarboxylic acid amide), poly(paraphenylene-2,6-naphthalene dicarboxylic acid amide), poly(2-chloro-paraphenylene terephthalamide), and a paraphenylene terephthalamide/2,6-dichloroparaphenylene terephthalamide copolymer.

Examples of the aromatic polyimide include a wholly aromatic polyimide produced by condensation polymerization of an aromatic tetracarboxylic dianhydride and an aromatic diamine. Examples of the aromatic tetracarboxylic dianhydride include pyromellitic dianhydride, 3,3',4,4'-diphenyl sulfone tetracarboxylic dianhydride, 3,3',4,4'-benzophenone tetracarboxylic dianhydride, 2,2'-bis(3,4-dicarboxyphenyl)hexafluoropropane dianhydride, and 3,3',4,4'-biphenyl tetracarboxylic dianhydride. Examples of the aromatic diamine include oxydianiline, paraphenylenediamine, benzophenone diamine, 3,3'-methylenedianiline, 3,3'-diaminobenzophenone, 3,3'-diaminodiphenyl sulfone, and 1,5'-naphthalene diamine.

Examples of the aromatic polyamide imide include a resin obtained by condensation polymerization of an aromatic dicarboxylic acid and an aromatic diisocyanate and a resin obtained by condensation polymerization of an aromatic tricarboxylic acid anhydride and an aromatic diisocyanate. Examples of the aromatic dicarboxylic acid include isophthalic acid and terephthalic acid. Examples of the aromatic tricarboxylic acid anhydride include trimellitic anhydride. Examples of the aromatic diisocyanate include 4,4'-diphenylmethane diisocyanate, 2,4-tolylene diisocyanate, 2,6-tolylene diisocyanate, ortho tolylane diisocyanate, and m-xylene diisocyanate.

Among the heat-resistant resins exemplified above, the resin whose glass-transition temperature is not less than 200°C is, for example, an aromatic polyamide, an aromatic polyimide, an aromatic polyamide imide, an aromatic polyester, or a polyether sulfone.

Among the heat-resistant resins having ion conductivity, a resin whose glass-transition temperature is not less than 200°C is, for example, a resin in which at least some atoms of the main chain of an aromatic polyamide, an aromatic polyimide, an aromatic polyamide imide, an aromatic polyester, or a polyether sulfone are substituted by the functional groups having an anion.

The heat-resistant resin having ion conductivity is such that hydrogen atoms contained in the main chain of the heat-resistant resin and hydrogen atoms contained in a hydroxy group, a carboxy group, an amide group, and an amino group are substituted by the functional groups having an anion. More specifically, for example, a hydrogen atom of an aromatic ring, a hydrogen atom in the amide group of an amide bond, a hydrogen atom in the hydroxy group of an aliphatic alcohol or an aromatic alcohol, and a hydrogen atom in the amino group of an aliphatic amine or an aromatic amine are substituted by the functional groups having an anion. The substitution of the functional group can be carried out by using a technique publicly known in the field of organic chemistry For example, the substitution of the functional group is carried out by a nucleophilic reaction or an electrophilic reaction.

The heat-resistant resin having ion conductivity is preferably a resin in which at least some atoms of the main chain of an aromatic polyamide, an aromatic polyimide, an aromatic polyamide imide, an aromatic polyester, or a polyether sulfone are substituted by a sulfonate group, an alkyl sulfonate group, a carboxylate group, an alkyl carboxylate group, a phosphonate group, an alkyl phosphonate group, a trifluoroborate group, or an alkyl trifluoroborate group.

[2. Solid electrolyte-containing layer and all-solid-state secondary battery including the same]

[2.1. Solid electrolyte-containing layer]

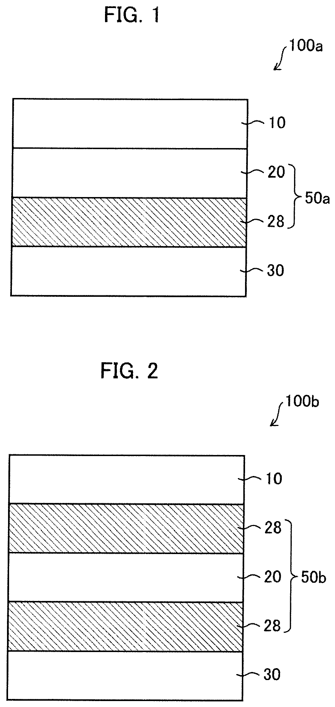

Reference will be made to Figs. 1 and 2. The all-solid-state secondary batteries 100a and 100b include the solid electrolyte-containing layers 50a and 50b, respectively. The solid electrolyte-containing layers 50a and 50b contain a solid electrolyte and a heat-resistant resin having ion conductivity. More specifically, the solid electrolyte-containing layers 50a and 50b include: a solid electrolyte layer 20 containing a solid electrolyte; and a resin layer 28 including a heat-resistant resin having ion conductivity. The solid electrolyte layer 20 and the resin layer 28 are adjacent to each other.

The resin layer 28 is preferably disposed between the solid electrolyte layer 20 and a negative electrode 30. Between the solid electrolyte layer 20 and a positive electrode 10, the resin layer 28 may not be provide (all-solid-state secondary battery 100a and solid electrolyte-containing layer 50a), or the resin layer 28 may be provided (all-solid-state secondary battery 100b and solid electrolyte-containing layer 50b).

Illustrated in Fig. 1 is the solid electrolyte-containing layer 50a in which the resin layer 28 is formed on one face of the solid electrolyte layer 20. Illustrated in Fig. 2 is the solid electrolyte-containing layer 50b in which the resin layer 28 is formed on both faces of the solid electrolyte layer 20. From the viewpoint of making all-solid-state secondary batteries compact, the resin layer 28 is preferably provided on one face of the solid electrolyte layer 20 (i.e., the form of the all-solid-state secondary battery 100a is preferable).

In an all-solid-state secondary battery in which a solid electrolyte is used as an electrolyte, there is a problem of the formation of a dendrite. Specifically, metal (e.g., metallic lithium) is dendritically deposited, typically on a negative electrode side, as a charge-discharge cycle or a constant-voltage charge is performed. This dendritic metal (dendrite) grows from the negative electrode side to a positive electrode side along the grain boundaries of the solid electrolyte. This causes a problem of a short circuit between the positive electrode and the negative electrode. In the present invention, this problem is solved by providing the solid electrolyte-containing layer 50a or 50b.

All-solid-state secondary batteries, in which a flammable organic solvent is not used as an electrolytic solution, have a low risk of ignition and combustion and are intrinsically highly safe. For this reason, a cooling system is considered unnecessary for all-solid-state secondary batteries, unlike conventional liquid-based secondary batteries. All-solid-state secondary batteries are therefore intended for use under higher temperature. Another intended case is that all-solid-state secondary batteries are used while being externally warmed by using a heat generator, such as a heater, so that the ion conductivity of the solid electrolyte is increased. In this case, the inside of the all-solid-state secondary battery is affected also by heat generated by charging and discharging and can be in a high-temperature environment (approximately 150°C or higher). In such a high-temperature environment, even if a resin layer is provided between the solid electrolyte layer 20 and the negative electrode 30, when the resin does not have heat resistance, the resin softens or melts, or the resin layer itself deforms. This makes it easy for a dendrite to penetrate the resin layer. That is a new problem found by the inventors of the present invention. It is therefore desirable that a layer provided between the solid electrolyte layer 20 and the negative electrode 30 should not soften, melt, or deform even in a high-temperature environment.

For this reason, a heat-resistant resin having ion conductivity is used in the resin layer 28 in the present invention. A heat-resistant resin having ion conductivity is excellent in heat resistance, and is therefore less likely to soften, melt, and deform even in a high-temperature environment. This solves the foregoing problem. By means of the heat-resistant resin having ion conductivity, the resin layer 28 physically hinders a dendrite having formed in the negative electrode 30 and prevents a short circuit between electrodes. Further, since the solid electrolyte layer 20 and the negative electrode 30 are not in direct contact with each other, the negative electrode 30 forms a good interface. This makes it possible to reduce the formation of the core of a dendrite on the surface of the negative electrode 30.

The heat-resistant resin having ion conductivity has a glass-transition temperature preferably of not less than 200°C, and more preferably of not less than 250°C. The upper limit of the glass-transition temperature of the heat-resistant resin having ion conductivity is not more than 450°C, for example. The upper limits and the lower limits of the glass-transition temperature of the heat-resistant resin having ion conductivity may be combined. As a result of the combination, examples of the range of the glass-transition temperature include: not less than 200°C and not more than 450°C; and not less than 250°C and not more than 450°C. When the glass-transition temperature of the heat-resistant resin having ion conductivity is not less than 200°C, it is possible to further prevent the resin layer 28 from melting, softening, and deforming even if the insides of the all-solid-state secondary batteries 100a and 100b are in the high-temperature environment as described above.

Incidentally, the inventors of the present invention have found another problem which is that, when a layer only containing a heat-resistant resin that does not have ion conductivity is provided between the solid electrolyte layer 20 and the negative electrode 30, the all-solid-state secondary batteries 100a and 100b do not function as batteries due to high resistance. Accordingly, as a resin to be contained in the resin layer 28, a heat-resistant resin having ion conductivity is used.

[2.2. Resin layer]

The resin layer 28 contains a heat-resistant resin having ion conductivity. The heat-resistant resin having ion conductivity is as described in the section [1], and the description thereof is not repeated again.

The resin layer 28 may contain other materials, in addition to the heat-resistant resin having ion conductivity. Examples of the other materials include ion-conductive material and another resin. Specific examples of the ion-conductive material include at least one selected from an ionic liquid, a mixture of an ionic liquid and a lithium salt, and a polymer electrolyte. Examples of another resin include substances which will be exemplified in the section [2.3].

The ionic liquid refers to a substance containing cations and anions and having a melting point of not more than 100°C (preferably a substance that is in a liquid state at room temperature (e.g., 25°C)). The cations contained in the ionic liquid are typically an organic cation (or may be a complex ion in which an organic ligand is coordinated to an inorganic cation). Examples of the cations include an ammonium-based cation (imidazolium salts, pyridinium salts, etc.), a phosphonium ion-based cation, an alkali metal cation, and an alkaline-earth metal cation. Examples of the anions include a halogen-based anion (bromide ion, etc.), a boron-based anion (tetrafluoroborate, etc.), a phosphorus-based anion (hexafluorophosphate, etc.), a sulfonylimide-based anion (bis(trifluoromethylsulfonyl)imide (TFSI), bis(fluorosulfonyl)imide (FSI), etc.). Examples of the organic ligand coordinated to an inorganic cation (e.g., lithium ion) include triglyme and tetraglyme. The ionic liquid may be a mixture of a lithium salt and a non-ionic organic ligand. For example, the ionic liquid is a mixture of a lithium salt and tetraglyme. In this case, the cations contained in the ionic liquid are lithium-containing complex ions, and the anions contained in the ionic liquid are anions originally contained in the lithium salt.

Examples of the lithium salt of the mixture of an ionic liquid and the lithium salt include lithium hexafluorophosphate ($LiPF_6$), lithium tetrafluoroborate ($LiBF_4$), lithium perchlorate ($LiClO_4$), lithium bis(fluorosulfonyl)imide (LiFSI: $LiN(SO_2F)_2$), lithium bis(trifluoromethylsulfonyl)imide (LiTFSI: $LiN(SO_2CF_3)_2$), lithium bis(perfluoroethylsulfonyl)imide ($LiN(SO_2C_2F_5)_2$), $LiAsF_6$, $LiCF_3SO_3$, and lithium difluoro(oxalato)borate.

The polymer electrolyte is a mixture of a polymer compound having a polarity in the molecule thereof and a lithium salt. Examples of the polymer compound having a polarity in the molecule thereof include a compound having an alkylene oxide structure (ethylene oxide structure, propylene oxide structure, etc.), a polyethylenimine-based polymer, a polyalkylenesulfide-based polymer, and a polyvinylpyrrolidone-based polymer. These polymer compounds are capable of containing a large amount of lithium salts. This enables an increase in ion conductivity. Examples of the lithium salt contained in the polymer electrolyte include the compounds listed as examples of the lithium salt of the mixture of an ionic liquid and the lithium salt.

The resin layer 28 contains the heat-resistant resin having ion conductivity in a weight proportion whose lower limit is preferably not less than 10 weight%, more preferably not less than 20 weight%, and even more preferably not less than 30 weight%, where the weight of the resin layer 28 is regarded as 100 weight%. Although the upper limit of the weight proportion of the heat-resistant resin having ion conductivity is not limited to any particular value, the upper limit can be not more than 99 weight% or not more than 95 weight%. As a result of combining the upper limits and the lower limits of the weight proportion of the heat-resistant resin having ion conductivity, examples of the range of the weight proportion include: not less than 10 weight% and not more than 99 weight%; not less than 20 weight% and not more than 95 weight%; and not less than 30 weight% and not more than 95 weight%. In an embodiment, the resin layer 28 can be a layer substantially consisting only of the heat-resistant resin having ion conductivity. When the heat-resistant resin having ion conductivity is contained in the proportions described above, it is possible to more surely prevent a short circuit caused by the formation of a dendrite.

The resin layer 28 has a thickness whose lower limit is preferably not less than 0.1 $\mu$m and more preferably not less than 0.5 $\mu$m. The upper limit of the thickness of the resin layer 28 is preferably not more than 500 $\mu$m and more preferably not more than 250 $\mu$m. As a result of combining the upper limits and the lower limits of the thickness of the resin layer 28, examples of the range of the thickness include: not less than 0.1 $\mu$m and not more than 500 $\mu$m; and not less than 0.5 $\mu$m and not more than 250 $\mu$m. The resin layer 28 has an ion conductivity (e.g., lithium ion conductivity) whose lower limit is preferably not less than $1\times10^{-10}$ S/cm, more preferably not less than $1\times10^{-9}$ S/cm, and even more preferably not less than $1\times10^{-8}$ S/cm, at 80°C. The upper limit of the ion conductivity of the resin layer 28 is not more than $1\times10^{-1}$ S/cm, for example. The upper limits and the lower limits of the ion conductivity of the resin layer 28 may be combined. As a result of the combination, examples of the range of the ion conductivity include: not less than $1\times10^{-10}$ S/cm and not more than $1\times10^{-1}$ S/cm; not less than $1\times10^{-9}$ S/cm and not more than $1\times10^{-1}$ S/cm; and not less than $1\times10^{-8}$ S/cm and not more than $1\times10^{-1}$ S/cm. Examples of a method for measuring the ion conductivity of the resin layer 28 include the method in which an impedance method is used and which is described in the section [1].

[2.3. Form of resin layer and method for producing resin layer]

The resin layer 28 can take various forms. For example, the heat-resistant resin having ion conductivity may be either uniformly distributed or localized in the resin layer 28. Examples of the former include a layer consisting of the heat-resistant resin having ion conductivity. Examples of the latter include a layer in which the heat-resistant resin having ion conductivity and another resin are formed on top of each other.

Examples of a method for producing the resin layer 28 include the following methods (a), (b), and (c):

(a) A method of processing the heat-resistant resin having ion conductivity into a porous material (a porous film, a nonwoven fabric, etc.), which is used as the resin layer 28. From the viewpoint of making the resin layer 28 thinner, the porous material is preferably a porous film.

(b) A method of preparing a porous material containing the heat-resistant resin having ion conductivity and another substance (a porous film in which the heat-resistant resin having ion conductivity and another resin are formed on top of each other; a porous film impregnated with the heat-resistant resin having ion conductivity; a nonwoven fabric in which the heat-resistant resin having ion conductivity and another resin are blended), which is used as the resin layer 28. For the same reason as in (a), the porous material is preferably a porous film.

(c) A method of preparing a film of the heat-resistant resin having ion conductivity, to obtain the resin layer 28. Examples of the method of preparing the film include a wet method in which a solvent is used and a dry method in which a mixture is bonded under pressure.

Here, the term "porous material" in the forms of (a) and (b) refers to a material having many pores and therefore capable of allowing a gas or a liquid to pass through one face thereof to the other face.

The diameter of the pores of the porous material is not limited to any particular value, but is preferably not more than 0.3 $\mu$m and more preferably not more than 0.14 $\mu$m. The weight per unit area of the porous material is not limited to any particular value, but is preferably 4 g/m$^2$ to 20 g/m$^2$, more preferably 4 g/m$^2$ to 12 g/m$^2$, and even more preferably 5 g/m$^2$ to 12 g/m$^2$. The air permeability of the porous material is preferably 30 sec/100 mL to 500 sec/100 mL and more preferably 50 sec/100 mL to 300 sec/100 mL in terms of Gurley values measured in conformity with JIS P8117.

Examples of the "another resin" in the above-described form of (b) include a polyolefin. Specific examples of the polyolefin include a homopolymer and a copolymer obtained by polymerizing (or copolymerizing) a monomer(s) such as ethylene, propylene, 1-butene, 4-methyl-1-pentene, and/or 1-hexene. Examples of such a homopolymer include polyethylene, polypropylene, and polybutene. Examples of such a copolymer include an ethylene-propylene copolymer. Among these resins, polyethylene is preferable. Examples of the polyethylene include low-density polyethylene, high-density polyethylene, linear polyethylene (an ethylene-$\alpha$-olefin copolymer), and ultra-high molecular weight polyethylene having a weight-average molecular weight of not less than 1,000,000. Among these kinds of polyethylene, ultra-high molecular weight polyethylene is particularly preferable.

The resin layer 28 is a short circuit prevention layer having the function of preventing a short circuit and prevents a short circuit caused by a dendrite even under a high-temperature environment. Further, the resin layer 28 is a layer having enough ion conductivity. The resin layer 28 can be therefore referred to as a "short circuit prevention layer for all-solid-state secondary batteries that includes a heat-resistant resin having ion conductivity". Whether the resin layer 28 has the function of preventing a short circuit (i.e., whether the resin layer 28 enables prevention of a short circuit caused by a dendrite under a high-temperature environment) can be judged by performing the following procedures.

1. A coin-type lithium battery CR2032 is used as a cell to be evaluated (which can be hereinafter referred to as a coin cell) and is subjected to a dendrite resistance test.
2. At the point in time when five minutes elapses after the test starts, a coin cell whose voltage became substantially-constant negative voltage is taken apart, and a solid electrolyte layer thereof is taken out.
3. The surface of the solid electrolyte layer having been taken out is observed. When there are less than 10 black points (i.e., dendrite evidences) present on the surface of the solid electrolyte layer, the resin layer 28 is judged to "have the function of preventing a short circuit".

(Dendrite resistance test)

A laminated body under test which is as follows is prepared with use of a coin cell. While an electric current is passed through this laminated body at a density of 0.10 mA/cm$^2$ so that metal Li is continuously deposited on the negative electrode side, a change in voltage over time is observed. The test is conducted at 85°C or 90°C.

The layer configuration of the laminated body under test is as follows:

· Stainless steel plate, thickness: 500 $\mu$m, diameter: 15.5 mm
· Metallic lithium foil on a dissolution side (positive electrode 10), thickness: 500 $\mu$m, diameter: 13 mm
· Solid electrolyte layer 20 (e.g., a sintered body of Li$_{6.75}$La$_3$Zr$_{1.75}$Nb$_{0.25}$O$_{12}$, the sintered body having a thickness of 500 $\mu$m and a diameter of 15 mm, available from TOSHIMA Manufacturing Co., Ltd.)
· Resin layer 28, diameter: 16 mm
· Metallic lithium foil on a deposition side (negative electrode 30), thickness: 500 $\mu$m, diameter: 13 mm

In the dendrite resistance tests, when no short circuit occurs and metal lithium is stably deposited on the negative electrode 30, the voltage of the coin cell becomes substantially-constant negative value. Meanwhile, when the coin cell is completely short-circuited due to a dendrite, the voltage of the coin cell becomes 0 V. Further, when a micro short circuit (micro short) is repeated due to dendrites, the voltage of the coin cell heavily varies between 0 V and a negative value.

The number of dendrite evidences present on the surface of the solid electrolyte layer 20 being less than 10 after the dendrite resistance test indicates that the resin layer 28 inhibits the growth of a dendrite and prevents a dendrite from entering the solid electrolyte layer.

[2.4. Solid electrolyte layer]

The solid electrolyte layer 20 is a layer containing at least a solid electrolyte. The solid electrolyte layer 20 is a layer different from the resin layer 28. For example, the solid electrolyte layer 20 contains the heat-resistant resin having ion conductivity in a weight proportion of less than 1 weight%.

The solid electrolyte layer 20 has a thickness whose lower limit is, for example, not less than 5 $\mu$m and whose upper limit is, for example, not more than 500 $\mu$m. The upper limits and the lower limits of the thickness of the solid electrolyte layer 20 may be combined. As a result of the combination, examples of the range of the thickness include not less than 5 $\mu$m and not more than 500 $\mu$m.

The solid electrolyte layer 20 has an ion conductivity (e.g., lithium ion conductivity) at 25°C is preferably not less than $1\times10^{-5}$ S/cm, and more preferably not less than $1\times10^{-4}$ S/cm, for example. The upper limit of the ion conductivity (e.g., lithium ion conductivity) at 25°C of the solid electrolyte layer 20 is not more than $1\times10^{-1}$ S/cm, for example. The lower limits and the upper limits of the ion conductivity (e.g. lithium ion conductivity) of the solid electrolyte layer 20 may be combined. As a result of the combination, examples of the range of the ion conductivity include: not less than $1\times10^{-5}$ S/cm and not more than $1\times10^{-1}$ S/cm; and not less than $1\times10^{-4}$ S/cm and not more than $1\times10^{-1}$ S/cm.

Examples of a method for measuring the lithium ion conductivity at 25°C of the solid electrolyte layer 20 include the method in which an impedance method is used and which is described in the section [1], where the solid electrolyte is used as a measurement sample.

Examples of the solid electrolyte include an inorganic solid electrolyte and an organic solid electrolyte. Examples of the inorganic solid electrolyte include a sulfide-based solid electrolyte, an oxide-based solid electrolyte, and a nitride-based solid electrolyte. Examples of the organic solid electrolyte include a polymer electrolyte and a gel electrolyte.

Among these solid electrolytes, the sulfide-based solid electrolyte and the oxide-based solid electrolyte are susceptible to the formation of a dendrite along the grain boundaries of the particles thereof. The resin layer 28 makes it possible, even when a sulfide-based solid electrolyte or an oxide-based solid electrolyte is used therein, to reduce dendrites and therefore prevent a short circuit between electrodes caused by the formation of a dendrite. Further, a sulfide-based solid electrolyte has a risk of generating a poisonous gas, such as hydrogen sulfide, when being exposed to the atmosphere, whereas an oxide-based solid electrolyte does not have such a risk. It is therefore preferable to use an oxide-based solid electrolyte as the inorganic solid electrolyte, from the viewpoint of the safety of the all-solid-state secondary battery.

(Inorganic solid electrolyte)

The sulfide-based solid electrolyte typically contains the lithium element and the sulfur element. The sulfide-based solid electrolyte preferably further contains one or more elements selected from the group consisting of the phosphorus element, the germanium element, the tin element, and the silicon element. The sulfide-based solid electrolyte may contain one or more elements selected from the group consisting of the oxygen element and halogen elements (e.g., the fluorine element, the chlorine element, the bromine element, the iodine element).

Examples of the sulfide-based solid electrolyte include $Li_2S-P_2S_5$, $Li_2S-P_2S_5-GeS_2$, $Li_2S-P_2S_5-SnS_2$, $Li_2S-P_2S_5-SiS_2$, $Li_2S-P_2S_5-LiI$, $Li_2S-P_2S_5-LiI-LiBr$, $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (m and n are positive numbers, and Z is Ge, Zn, or Ga), $Li_2S-GeS_2$, $Li_2S-SiS_2-Li_3PO_4$, and $Li_2S-SiS_2-Li_xMO_y$ (x and y are positive numbers, and M is P, Si, Ge, B, Al, Ga, or In). Here, the expression "A-B" means a "material made by using a raw material composition containing A and B". For example, the expression "$Li_2S-P_2S_5$" means a "material made by using a raw material composition containing $Li_2S$ and $P_2S_5$".

Examples of the oxide-based solid electrolyte include: a NASICON-type solid electrolyte (e.g., $LiTi_2(PO_4)_3$ and an element-substitution product thereof ($Li_{1+x}Al_xTi_{2-x}(PO_4)_3$, $Li_{1+x+y}Al_xTi_{2-x}P_{3-y}Si_yO_{12}$, and the like)); a perovskite-type solid electrolyte (e.g., $(LaLi)TiO_3$ and $La_{1-3x}Li_{3x}TiO_3$); a LISICON-type solid electrolyte (e.g., $Li_4SiO_4$ and $LiGeO_4$, and an element-substitution product thereof (for example, $Li_{4-2x}Zn_xGeO_4$ (e.g., $Li_{14}ZnGe_4O_{16}$)); a glass ceramic-type solid electrolyte (e.g., $Li_{1.5}AL_{0.5}Ge_{1.5}(PO_4)_3$); $Li_3N$ and a H-substitution product thereof; and $Li_3PO_4$ and a N-substitution product thereof (e.g., $Li_{2.9}PO_{3.3}N_{0.46}$ (LIPON)).

Examples of the oxide-based solid electrolyte also include a garnet-type solid electrolyte having a garnet-type crystal structure. A garnet-type solid electrolyte has high lithium ion conductivity and is stable with respect to, for example, water, oxygen, and lithium metal.

A garnet-type solid electrolyte can take a cubic crystal structure. Examples of the garnet-type solid electrolyte include a composite oxide containing Li, La, and Zr and a composite oxide containing Li, La, and Zr. The garnet-type solid electrolyte may contain one or more substitution elements selected from the group consisting of Al, Mg, Ca, Sr, Ba, Ta, Nb, and Yb. More specific examples include $Li_7La_3Zr_2O_{12}$ (LLZ), $Li_6La_3Ta_{1.5}Y_{0.5}O_{12}$ (LLTY), and $Li_6BaLa_2Ta_2O_{12}$ (LBLT). Examples of an element-substitution product of LLZ include $Li_{7-3x}Al_xLa_3Zr_2O_{12}$ and $Li_{7-x}La_3Zr_{2-y}M_yO_{12}$ (M is a pentavalent element such as Nb or Ta).

The inorganic solid electrolyte may be glass, may be glass ceramic, or may be a crystal material. Glass is obtained by subjecting a raw material composition (e.g., a mixture of $Li_2S$ and $P_2S_5$) to amorphization treatment. Examples of the amorphization treatment include mechanical milling. Glass ceramic is obtained by subjecting glass to heat treatment. A crystal material is obtained by, for example, subjecting a raw material composition to solid-state reaction treatment.

When the solid electrolyte layer 20 is made of an inorganic solid electrolyte, the inorganic solid electrolyte is preferably in a pellet form. The inorganic solid electrolyte in a pellet form has a thickness preferably of not more than 1 mm, and more preferably of not more than 500 $\mu$m. The lower limit of the thickness of the inorganic solid electrolyte is not less than 5 $\mu$m, for example. The lower limits and the upper limits of the thickness of the inorganic solid electrolyte may be combined. As a result of the combination, examples of the range of the thickness include: not less than 5 $\mu$m and not more than 1 mm; and not less than 5 $\mu$m and not more than 500 $\mu$m.

The inorganic solid electrolyte has a lithium ion conductivity at 25°C preferably of not less than $1\times10^{-5}$ S/cm and more preferably of not less than $1\times10^{-4}$ S/cm, for example. The upper limit of the lithium ion conductivity at 25°C of the inorganic solid electrolyte is, for example, not more than $1\times10^{-1}$ S/cm. The lower limits and the upper limits of the ion conductivity (e.g. lithium ion conductivity) of the inorganic solid electrolyte may be combined. As a result of the combination, examples of the range of the ion conductivity include: not less than $1\times10^{-5}$ S/cm and not more than $1\times10^{-1}$ S/cm; and not less than $1\times10^{-4}$ S/cm and not more than $1\times10^{-1}$ S/cm. Examples of a method for measuring the lithium ion conductivity of the inorganic solid electrolyte at 25°C include the method in which an impedance method is used and which is described in the section [1].

(Organic solid electrolyte)

Among the organic solid electrolytes, examples of the polymer electrolyte include the substances exemplified in the section [2.2.].

The gel electrolyte is, for example, a mixture of a polymer compound having a gelation effect and a nonaqueous electrolyte. The gel electrolyte, which is a polymer compound holding a nonaqueous electrolyte, has moderate plasticity and adhesion and has an ion conductivity close to that of the nonaqueous electrolyte. An all-solid-state secondary battery in which the gel electrolyte is used can provide high charge-discharge efficiency. A mixing ratio of the polymer compound to the nonaqueous electrolyte can be (2:3) to (3:2), from the viewpoint of obtaining a moderate plasticity.

Examples of the polymer compound having a gelation effect include a fluorine resin containing a vinylidene fluoride unit, an acrylic resin containing a (meta)acrylic acid unit (the (meta)acrylic acid unit may have been esterified), and a polyether resin containing a polyalkylene oxide unit. Examples of the fluorine resin containing a vinylidene fluoride unit include polyvinylidene fluoride, a copolymer containing a vinylidene fluoride unit and a hexafluoropropylene unit, and a copolymer containing a vinylidene fluoride unit and a trifluoroethylene unit. In addition, the polymer compound (e.g., a compound having an alkylene oxide structure) used in the polymer electrolyte can be used.

The nonaqueous electrolyte contained in the gel electrolyte contains a lithium salt and a nonaqueous solvent in which the lithium salt is to be dissolved. Examples of the lithium salt include substances exemplified in the section [2.2.]. Examples of the nonaqueous solvent include cyclic carbonate esters, chain carbonate esters, carboxylic acid esters, cyclic ethers, chain ethers, nitriles, and amides.

[2.5. All-solid-state secondary batteries]

Fig. 1 is a schematic diagram of an all-solid-state secondary battery in accordance with an aspect of the present invention. The all-solid-state secondary battery 100a includes: a positive electrode 10; a solid electrolyte-containing layer 50a; and a negative electrode 30. The solid electrolyte-containing layer 50a is disposed such that the resin layer 28 is located between the solid electrolyte layer 20 and the negative electrode 30. In the solid electrolyte-containing layer 50a in Fig. 1, the resin layer 28 is provided on one face of the solid electrolyte layer 20. Therefore, the resin layer 28 is absent between the positive electrode 10 and the solid electrolyte layer 20.

Fig. 2 is a schematic diagram of an all-solid-state secondary battery in accordance with another aspect of the present invention. The all-solid-state secondary battery 100b includes a solid electrolyte-containing layer 50b in which the resin layer 28 is provided on both faces of the solid electrolyte layer 20. Therefore, the resin layer 28 is present also between the positive electrode 10 and the solid electrolyte layer 20.

As used herein, the term "all-solid-state secondary battery" refers to a secondary battery in which a solid electrolyte is used as an electrolyte, that is, a secondary battery including a solid electrolyte. In an embodiment, the all-solid-state secondary batteries 100a and 100b do not include an electrolytic solution (e.g., aqueous electrolyte or nonaqueous electrolyte).

The all-solid-state secondary batteries 100a and 100b are not limited to any particular form. Examples of the form include a coin-type cell, a laminate-type cell, a cylindrical cell, and a prismatic cell. Although being capable of being charged and discharged repeatedly, the all-solid-state secondary batteries can serve as a primary battery. Specifically, the all-solid-state secondary battery having been charged may be used for one-time-only discharge.

The all-solid-state secondary batteries 100a and 100b are, for example, all-solid-state lithium secondary batteries, all-solid-state sodium secondary batteries, or the like, and are preferably all-solid-state lithium secondary batteries.

The all-solid-state secondary batteries 100a and 100b are not limited to any particular use. For example, the all-solid-state secondary batteries 100a and 100b are used for moving bodies (electric automobiles, electric motorcycles, power-assisted bicycles, trains, etc.), industrial machines (construction machines, forklifts, elevators, etc.), stationary power supplies (solar power generation, wind power generation, UPS, medical devices, etc.), or consumer goods (mobile PC, smartphone, etc.).

Members included in the all-solid-state secondary batteries 100a and 100b except the solid electrolyte-containing layers 50a and 50b will be individually described below.

(Positive electrode)

The positive electrode 10 includes, for example, a positive electrode active material layer and a positive electrode current collector.

The positive electrode active material layer is a layer containing at least a positive electrode active material. Examples of the positive electrode active material include an oxide-based active material and a sulfur-based active material.

Examples of the oxide-based active material include: a layered rock-salt active material ($LiCoO_2$, $LiMnO_2$, $LiNiO_2$, $LiVO_2$, $LiNi_{1/3}Co_{1/3}Mn_{1/3}O_2$, etc.); a spinel active material ($LiMn_2O_4$, $Li_4Ti_5O_{12}$, $Li(Ni_{0.5}Mn_{1.5})O_4$, etc.); and an olivine active material ($LiFePO_4$, $LiMnPO_4$, $LiNiPO_4$, $LiCoPO_4$, etc.). Examples of the oxide-based active material also include an LiMn spinel active material represented by $Li_{1+x}Mn_{2-x-y}M_yO_4$ (M is at least one selected from the group consisting of Al, Mg, Co, Fe, Ni, and Zn, and $0 < x+y < 2$); and lithium titanate.

A coating layer containing a Li ion-conducting oxide may be provided on the surface of the oxide-based active material. Providing the coating layer enables inhibition of a reaction between the oxide-based active material and the solid electrolyte. Examples of the Li ion-conducting oxide include $LiNbO_3$, $Li_4Ti_5O_{12}$, and $Li_3PO_4$. The coating layer has a thickness whose lower limit can be, for example, not less than 0.1 nm or not less than 1 nm. The upper limit of the thickness of the coating layer can be, for example, not more than 100 nm or not more than 20 nm. As a result of combining the lower limits and the upper limits of the thickness of the coating layer, examples of the range of the thickness include: not less than 0.1 nm and not more than 100 nm; and not less than 1 nm and not more than 20 nm. The ratio of coverage, by the coating layer, of the surface of the oxide-based active material is, for example, not less than 70%, or not less than 90%.

The sulfur-based active material contains at least the sulfur element. The sulfur-based active material may optionally contain the Li element. Examples of the sulfur-based active material include elemental sulfur, lithium sulfide ($Li_2S$), and lithium polysulfide ($Li_2S_x$; $2 \leq x \leq 8$).

The positive electrode active material layer may contain, as needed, one or more selected from the group consisting of an inorganic solid electrolyte, an electrically conductive material, and a binder. The inorganic solid electrolyte can be, for example, the inorganic solid electrolyte described in the section [2.4.]. Examples of the electrically conductive material include acetylene black, Ketjenblack, and a carbon fiber. Examples of the binder include: a rubber binder (butylene rubber (BR), styrene butadiene rubber (SBR), etc.); and a fluoride binder (polyvinylidene fluoride (PVDF), etc.).

The positive electrode active material layer has a thickness whose lower limit is, for example, not less than 0.1 $\mu$m. The upper limit of the thickness of the positive electrode active material layer is, for example, not more than 300 $\mu$m or not more than 100 $\mu$m. As a result of combining the lower limits and the upper limits of the thickness of the positive electrode active material layer, examples of the range of the thickness include: not less than 0.1 $\mu$m and not more than 300 $\mu$m; and not less than 0.1 $\mu$m and not more than 100 $\mu$m.

Examples of a material of the positive electrode current collector include stainless steel, aluminum, nickel, iron, titanium, and carbon. Examples of the form of the positive electrode current collector include a foil form and a plate form. The positive electrode current collector has a thickness whose lower limit is, for example, not less than 0.1 $\mu$m or not less than 1 $\mu$m. The upper limit of the thickness of the positive electrode current collector is, for example, not more than 1 mm or not more than 100 $\mu$m. As a result of combining the lower limits and the upper limits of the thickness of the positive electrode current collector, examples of the range of the thickness include: not less than 0.1 $\mu$m and not more than 1 mm; and not less than 1 $\mu$m and not more than 100 $\mu$m.

(Negative electrode)

The negative electrode 30 includes, for example, a negative electrode active material layer and a negative electrode current collector.

The negative electrode active material layer is a layer containing at least a negative electrode active material. Examples of the negative electrode active material include a lithium metal, a lithium alloy, a metal capable of being alloyed with lithium, a carbon-based material, and an oxide-based material.

Examples of the carbon-based material include graphite, amorphous carbon, a carbon nanotube, and graphene. Examples of the oxide-based material include $Li_4Ti_5O_{12}$ (LTO) and $TiO_2$.

The negative electrode active material layer may contain, as needed, one or more selected from the group consisting of an inorganic solid electrolyte, an electrically conductive material, and a binder. These materials are, for example, the inorganic solid electrolyte, the electrically conductive material, and the binder that can be contained in the positive electrode active material layer and that are exemplified in the section [2.5.], the heading (Positive electrode).

The negative electrode active material layer has a thickness whose lower limit is, for example, not less than 0.1 $\mu$m. The upper limit of the thickness of the negative electrode active material layer is, for example, not more than 300 $\mu$m or not more than 100 $\mu$m. As a result of combining the lower limits and the upper limits of the thickness of the negative electrode active material layer, examples of the range of the thickness include: not less than 0.1 $\mu$m and not more than 300

$\mu$m; and not less than 0.1 $\mu$m and not more than 100 $\mu$m.

Examples of a material of the negative electrode current collector include a material that is not capable of being alloyed with Li. More specific examples of such a material include stainless steel, copper, nickel, and carbon. Examples of the form of the negative electrode current collector include a foil form and a plate form. The negative electrode current collector has a thickness whose lower limit is, for example, not less than 0.1 $\mu$m or not less than 1 $\mu$m. The upper limit of the thickness of the negative electrode current collector is, for example, not more than 1 mm or not more than 100 $\mu$m. As a result of combining the lower limits and the upper limits of the thickness of the negative electrode current collector, examples of the thickness include: not less than 0.1 $\mu$m and not more than 1 mm; and not less than 1 $\mu$m and not more than 100 $\mu$m.

[2.6. Method for producing all-solid-state secondary batteries]

An aspect of the present invention is a method for producing all-solid-state secondary batteries 100a and 100b, the method including the step of disposing the solid electrolyte-containing layer 50a or 50b between the positive electrode 10 and the negative electrode 30. In an embodiment, this production method includes the step of disposing the resin layer 28 between the solid electrolyte layer 20 and the negative electrode 30.

Examples of the method for disposing the resin layer 28 between the solid electrolyte layer 20 and the negative electrode 30 include the following methods.

($\alpha$) A method of preparing the resin layer 28 and then disposing the resin layer 28 between the solid electrolyte layer 20 and the negative electrode 30. For example, a method of placing the resin layer 28 of a sheet form on the solid electrolyte layer 20 or the negative electrode 30.

($\beta$) A method of applying, on the solid electrolyte layer 20 or the negative electrode 30, a solution containing the heat-resistant resin having ion conductivity to prepare the resin layer 28. For example, a method of (i) preparing a solution containing the heat-resistant resin having ion conductivity and a solvent, (ii) applying the solution on the solid electrolyte layer 20 or the negative electrode 30, and (iii) carrying out drying to remove the solvent.

($\gamma$) A method of disposing, on the solid electrolyte layer 20 or the negative electrode 30, powder containing the heat-resistant resin having ion conductivity and then molding the powder, to prepare the resin layer 28. For example, a method of (i) preparing powder containing the heat-resistant resin having ion conductivity, (ii) disposing the powder on the solid electrolyte layer 20 or the negative electrode 30, and (iii) carrying out press-molding of the powder.

(Method for producing all-solid-state secondary battery 100a)

Carrying out any of the above methods ($\alpha$) to ($\gamma$) can provide a laminated body in which the solid electrolyte layer 20, the resin layer 28, and the negative electrode 30 are formed on top of each other in this order and which includes a single resin layer 28. When the positive electrode 10 is additionally formed on the solid electrolyte layer 20 of this laminated body, a laminated body (all-solid-state secondary battery 100a) in which the positive electrode 10, the solid electrolyte layer 20, the resin layer 28, and the negative electrode 30 are formed on top of each other in this order can be produced.

(Method for producing all-solid-state secondary battery 100b)

Carrying out any of the above methods ($\alpha$) to ($\gamma$) can provide a laminated body in which the solid electrolyte layer 20, the resin layer 28, and the negative electrode 30 are formed on top of each other in this order and which includes a single resin layer 28. When the resin layer 28 and the positive electrode 10 are additionally formed on the solid electrolyte layer 20 of this laminated body, a laminated body (all-solid-state secondary battery 100b) in which the positive electrode 10, the resin layer 28, the solid electrolyte layer 20, the resin layer 28, and the negative electrode 30 are formed on top of each other in this order can be produced.

The solid electrolyte layer 20 or the negative electrode 30 described above may each be a precursor. Specifically, the positive electrode 10, the solid electrolyte layer 20, or the negative electrode 30 may be formed by subjecting a precursor thereof to heating, pressure-bonding, etc. after carrying out the above methods ($\alpha$) to ($\delta$). The precursor is a compound or a mixture that becomes the positive electrode 10, the solid electrolyte layer 20, or the negative electrode 30 after undergoing heating, pressure-bonding, etc.

In the above production methods, the positive electrode 10, the solid electrolyte layer 20, and the negative electrode 30 may be produced by a publicly known method. For example, these layers can be produced by a wet method that includes drying a raw material slurry or by a powder molding method of pressing raw material powder. When the solid electrolyte layer 20 is an organic solid electrolyte layer, the solid electrolyte layer 20 can be produced by a polymerization method or the like which is publicly known.

The all-solid-state secondary batteries 100a and 100b may include a component such as a housing for holding the laminated body, and a lead for drawing an electric current from an electrode, although the component is not illustrated in the drawings. As a method for producing and assembling these members to build a battery product, a conventionally, publicly known method can be used.

The matters described in each of the above items can be employed as appropriate in another item. The present invention is not limited to the above-described embodiments, but may be altered in various ways by a skilled person within the scope of the claims. The present invention also encompasses, in its technical scope, any embodiment derived by combining technical means disclosed in differing embodiments.

All of the patent literatures described herein are employed herein as references.

The present invention will be described in more detail below by discussing Examples. However, the present invention is not limited only to the Examples below.

[Examples]

[Synthesis Example: synthesis of heat-resistant resin having ion conductivity]

On the basis of the previously published (Melinda B. Gieselman and John R. Reynolds (1990) "Poly[(p-phenyleneterephthalamido)propanesulfonate]: a new polyelectrolyte for application to conducting molecular composites", Macromolecules, vol.23 (issue 12), pp.3118-3124), a hydrogen atom of an amide group contained in poly(paraphenylene terephthalamide) was substituted by a propanesulfonate group. Specific procedures were as follows. In the following procedures, the amount of each of poly(paraphenylene terephthalamide), sodium hydride (NaH), and 1,3-propane sultone that were introduced was one equivalent with respect to the amount of the amide groups contained in poly(paraphenylene terephthalamide).

1. Into a reaction container whose inside air had been replaced with a nitrogen gas, 139 g of dimethyl sulfoxide (available from FUJIFILM Wako Pure Chemical Corporation, super-dehydrated) and 0.50 g of NaH (available from Sigma-Aldrich Co. LLC., 60% dispersion in mineral oil) were introduced.

2. The temperature of the reaction system was increased for one hour so as to reach 70°C. Next, the reaction system was kept at 70°C for 15 minutes. The reaction system was then cooled to 30°C.

3. To the reaction system, 1.50 g of poly(paraphenylene terephthalamide) was added, and the reaction system was then stirred for 1.5 hours at 60°C. Next, the reaction system was cooled to 40°C or lower.

4. To the reaction system, 1.54 g of 1,3-propane sultone (available from Sigma-Aldrich Co. LLC., $\geq$ 99%, acid < 200 ppm, $H_2O$ < 100 ppm) was added, and the reaction system was then stirred. The stirring was carried out for three days. The stirring conditions were as follows: one hour at 40°C for the first day, 10 hours at 40°C for the second day, and three hours at 60°C for the third day.

5. To the reaction system, 251 g of tetrahydrofuran (available from FUJIFILM Wako Pure Chemical Corporation, super-dehydrated, containing a stabilizing agent) was added, and the reaction system was then left to stand for one hour so that the reaction system was separated into a liquid phase and a solid phase. The solid phase was extracted by decantation.

6. To the solid phase thereby obtained, approximately equal volume of tetrahydrofuran was added by visual measurement. After being left to stand still for three days, the solid phase was extracted by decantation.

7. Tetrahydrofuran was added to the solid phase thereby obtained, and stirring was carried out for approximately one hour. Next, the reaction liquid was filtered in a nitrogen atmosphere, and dried under reduced pressure (at 50°C, for approximately 33 hours) so that the solvent was removed.

In this manner, 2.60 g of a product was obtained (yield: 88%). This product was an orange-colored resin, and found to have moisture absorbency. As to solubility in various kinds of solvents, the product is soluble in water and dimethyl sulfoxide, and insoluble in dimethyl carbonate, isopropyl alcohol, and N-methylpyrrolidone.

In this manner, 2.60 g of a product was obtained (yield: 88%). This product was orange-colored powder, and found to have moisture absorbency. As to solubility in various kinds of solvents, the product is soluble in water and dimethyl sulfoxide, and insoluble in dimethyl carbonate, isopropyl alcohol, and N-methylpyrrolidone.

As a result of measuring the infrared absorption spectrum of the product by the KBr tablet molding method, a spectrum that agreed well with the spectrum disclosed in the above-described previous publication was obtained. In particular, peaks at approximately 1200 cm$^{-1}$ and approximately 1150 cm$^{-1}$ that correspond to peaks of the symmetric stretching vibration and the asymmetric stretching vibration of S=O bonding sites were determined. From this, it was judged that a target heat-resistant resin having ion conductivity (a resin in which a hydrogen atom of an amide group contained in poly(paraphenylene terephthalamide) is substituted by a propane sulfonate group, the amount of the propanesulfonate group: 50 mol% to 66 mol%) was obtained.

[Determination of heat resistance]

A differential thermal analysis was performed on the obtained product. Measurement conditions were as follows: temperature range: 40°C to 250°C; temperature increase rate: 10°C/min. A DSC curve obtained in the second temperature increase was analyzed. As a result, it was determined that there is no glass-transition temperature in the range of up to 250°C. That is, the glass-transition temperature of the obtained resin having ion conductivity exceeds 250°C.

[Ion conductivity measurement]

The obtained heat-resistant resin having ion conductivity had an ion conductivity of $2.4 \times 10^{-8}$ S/cm. The measurement was based on an impedance method. Specific procedures of the measurement were as follows:

1. A solution was prepared by adding ethanol as a wetting agent to a resin having absorbed water. Next, a polyethylene porous film was impregnated with this solution, and then dried under reduced pressure at 50°C for 33 hours. A measurement sample was thereby prepared.
2. A coin-type lithium battery CR2032 (a coin cell) was prepared by sandwiching the measurement sample between two blocking electrodes (electrodes made of SUS) in a dry argon atmosphere in a glove box.
3. The obtained coin cell was conditioned in a thermostatic chamber at 80°C for 12 hours.
4. Measurement was carried out by using an impedance measuring device at 80°C, for frequencies ranging from 0.1 Hz to 1 MHz and an amplitude of 10 mV. An ion electrical conductivity σ was calculated from the following formula:

$$\sigma \; (S/cm) = t \; (cm) \times R \; (\Omega) \; / \; A \; (cm^2)$$

In this formula, R represents the value of an impedance. A represents the area of a sample, and t represents the thickness of the sample.

[Example]

A dendrite resistance test was conducted to verify a dendrite reduction effect and a voltage stabilization effect that were brought about by using a resin layer. In the test, a coin-type lithium battery CR2032 was used as a cell to be evaluated. Specifically, a laminated body under test including the layers (stainless steel plate / metallic lithium foil on a dissolution side / solid electrolyte-containing layer / metallic lithium foil on a deposition side) formed on top of each other in this order was prepared. An electric current was passed through this laminated body under test at a density of 0.10 mA/cm$^2$, and the behavior of a voltage over time was observed. Note that this electric current density is a limiting current density obtained when a deposition-dissolution cycle test is carried out with use of a pellet of an LLZN sintered body ($Li_{6.75}La_3Zr_{1.75}Nb_{0.25}O_{12}$, pellet thickness: 500 $\mu$m) available from TOSHIMA Manufacturing Co., Ltd. The electric current density is therefore a limiting current density obtained when the deposition-dissolution cycle test is carried out without using a resin layer. The test was carried out at 85°C for Example 1, 95°C for Example 2, and 85°C for Comparative Examples 1 and 2.

· Stainless steel plate, thickness: 500 $\mu$m, diameter: 15.5 mm
· Metallic lithium foil on a dissolution side, thickness: 500 $\mu$m, diameter: 13 mm
· Solid electrolyte-containing layer (which will be described later in detail)
· Metallic lithium foil on a deposition side, thickness: 500 $\mu$m, diameter: 13 mm.

[Example 1]

A solution was prepared by dissolving, in dimethyl sulfoxide, the heat-resistant resin having ion conductivity that was obtained in Synthesis Example. Next, this solution was applied on one surface of a solid electrolyte layer (available from TOSHIMA Manufacturing Co., Ltd., a sintered body of $Li_{6.75}La_3Zr_{1.75}Nb_{0.25}O_{12}$, thickness: 500 $\mu$m, diameter: 15 mm, ion conductivity at 25°C: $1.0 \times 10^{-5}$ S/cm), and then dried under reduced pressure at 50°C for 12 hours. A solid electrolyte-containing layer in which a resin layer 1 was formed on the solid electrolyte layer was thereby obtained. The solid electrolyte-containing layer thereby obtained was used to carry out a dendrite resistance test.

[Example 2]

A solution was prepared by causing the heat-resistant resin having ion conductivity that was obtained in Synthesis Example to absorb water and adding ethanol as a wetting agent to the heat-resistant resin. Next, a polyethylene porous film was impregnated with this solution, and then dried under reduced pressure at 50°C for 33 hours. A resin layer 2 which was polyethylene impregnated with the heat-resistant resin having ion conductivity was thus obtained. Next, a solid electrolyte-containing layer in which the resin layer 2 was formed on a solid electrolyte layer (available from TOSHIMA Manufacturing Co., Ltd., a sintered body of $Li_{6.75}La_3Zr_{1.75}Nb_{0.25}O_{12}$, thickness: 500 $\mu$m, diameter: 15 mm, ion conductivity at 25°C: $1.0 \times 10^{-5}$ S/cm) was obtained. The solid electrolyte-containing layer thereby obtained was used to carry out a dendrite resistance test.

[Comparative Example 1]

A solid electrolyte layer (available from TOSHIMA Manufacturing Co., Ltd., a sintered body of $Li_{6.75}La_3Zr_{1.75}Nb_{0.25}O_{12}$, thickness: 500 $\mu$m, diameter: 15 mm, ion conductivity at 25°C: $1.0 \times 10^{-5}$ S/cm) (without a resin layer) was used to carry out a dendrite resistance test.

[Comparative Example 2]

Dimethyl sulfoxide was dropped onto a solid electrolyte layer (available from TOSHIMA Manufacturing Co., Ltd., a sintered body of $Li_{6.75}La_3Zr_{1.75}Nb_{0.25}O_{12}$, thickness: 500 $\mu$m, diameter: 15 mm, ion conductivity at 25°C: $1.0 \times 10^{-5}$ S/cm), and then dried under reduced pressure at 50°C for 12 hours. The solid electrolyte layer thereby obtained was used to carry out a dendrite resistance test.

[Results]

When the solid electrolyte layers obtained in Comparative Examples 1 and 2 were used, a voltage became 0 V approximately three minutes after the test started. This can be because no resin layer was included and a short circuit therefore occurred due to a grown dendrite.

In contrast, when the solid electrolyte-containing layer obtained in Example 1 was used, a voltage did not become 0 V in approximately six minutes after the test started. Further, when the solid electrolyte-containing layer obtained in Example 2 was used, a voltage did not become 0 V from the start of the test until the end (approximately 22 minutes after the test started). From this, it can be considered that, by means of a resin layer, the solid electrolyte-containing layers obtained in Examples 1 and 2 made it possible to prevent a short circuit between electrodes caused by the formation of a dendrite. Further, a comparison between Examples 1 and 2 has shown that the solid electrolyte-containing layer obtained in Example 2 was able to prevent a short circuit due to a dendrite for longer time.

From the above results, it has been shown that by means of a solid electrolyte-containing layer including a resin layer, it is possible to prevent a short circuit between electrodes caused by the formation of a dendrite.

Industrial Applicability

The present invention is usable in all-solid-state secondary batteries and the like.

Reference Signs List

    10: Positive electrode
    20: Solid electrolyte layer
    28: Resin layer (short circuit prevention layer for all-solid-state secondary batteries)
    30: Negative electrode
    50a: Solid electrolyte-containing layer
    50b: Solid electrolyte-containing layer
    100a: All-solid-state secondary battery
    100b: All-solid-state secondary battery

**Claims**

1.    A solid electrolyte-containing layer comprising:

        a solid electrolyte; and

a heat-resistant resin having ion conductivity.

2. The solid electrolyte-containing layer according to claim 1, wherein:

the solid electrolyte-containing layer includes a solid electrolyte layer containing the solid electrolyte and includes a resin layer containing the heat-resistant resin having ion conductivity; and
the solid electrolyte layer and the resin layer are adjacent to each other.

3. The solid electrolyte-containing layer according to claim 1 or 2, wherein
the heat-resistant resin having ion conductivity has a glass-transition temperature of not less than 200°C.

4. The solid electrolyte-containing layer according to any one of claims 1 to 3, wherein
the solid electrolyte is an inorganic solid electrolyte.

5. An all-solid-state secondary battery comprising:

a positive electrode;
the solid electrolyte-containing layer according to any one of claims 1 to 4; and
a negative electrode.

6. A method for producing an all-solid-state secondary battery, the method comprising the step of
disposing, between a positive electrode and a negative electrode, the solid electrolyte-containing layer according to any one of claims 1 to 4.

7. A method for preventing a short circuit in an all-solid-state secondary battery, the method comprising
disposing, between a positive electrode and a negative electrode, the solid electrolyte-containing layer according to any one of claims 1 to 4.


**Patentansprüche**

1. Eine Festelektrolyt enthaltende Schicht, umfassend:

einen Festelektrolyten; und
ein wärmebeständiges Harz mit Ionenleitfähigkeit.

2. Die Festelektrolyt enthaltende Schicht gemäß Anspruch 1, wobei:

die Festelektrolyt enthaltende Schicht eine Festelektrolytschicht beinhaltet, die den Festelektrolyten enthält, und
eine Harzschicht beinhaltet, die das wärmebeständige Harz mit Ionenleitfähigkeit enthält; und
die Festelektrolytschicht und die Harzschicht benachbart zueinander sind.

3. Die Festelektrolyt enthaltende Schicht gemäß Anspruch 1 oder 2, wobei
das wärmebeständige Harz mit Ionenleitfähigkeit eine Glasübergangstemperatur von nicht weniger als 200 °C aufweist.

4. Die Festelektrolyt enthaltende Schicht gemäß einem der Ansprüche 1 bis 3, wobei
der Festelektrolyt ein anorganischer Festelektrolyt ist.

5. Eine Festkörper-Sekundärbatterie, umfassend:

eine positive Elektrode;
die Festelektrolyt enthaltende Schicht gemäß einem der Ansprüche 1 bis 4; und
eine negative Elektrode.

6. Ein Verfahren zur Herstellung einer Festkörper-Sekundärbatterie, wobei das Verfahren den Schritt umfasst
Anordnen der Festelektrolyt enthaltenden Schicht gemäß einem der Ansprüche 1 bis 4 zwischen einer positiven Elektrode und einer negativen Elektrode.

7. Ein Verfahren zum Verhindern eines Kurzschlusses in einer Festkörper-Sekundärbatterie, wobei das Verfahren umfasst

Anordnen der Festelektrolyt enthaltenden Schicht gemäß einem der Ansprüche 1 bis 4 zwischen einer positiven Elektrode und einer negativen Elektrode.

**Revendications**

1. Couche contenant un électrolyte solide comprenant :

   un électrolyte solide ; et
   une résine résistante à la chaleur ayant une conductivité ionique.

2. Couche contenant un électrolyte solide selon la revendication 1, où :

   la couche contenant un électrolyte solide comprend une couche d'électrolyte solide contenant l'électrolyte solide et comprend une couche de résine contenant la résine résistante à la chaleur ayant une conductivité ionique ; et
   la couche d'électrolyte solide et la couche de résine sont adjacentes l'une à l'autre.

3. Couche contenant un électrolyte solide selon la revendication 1 ou 2, où :
   la résine résistante à la chaleur ayant une conductivité ionique a une température de transition vitreuse qui n'est pas inférieure à 200°C.

4. Couche contenant un électrolyte solide selon l'une quelconque des revendications 1 à 3, où :
   l'électrolyte solide est un électrolyte solide inorganique.

5. Batterie secondaire tout solide comprenant :

   une électrode positive ;
   la couche contenant un électrolyte solide selon l'une quelconque des revendications 1 à 4 ; et
   une électrode négative.

6. Méthode de production d'une batterie secondaire tout solide, la méthode comprenant l'étape de disposition, entre une électrode positive et une électrode négative, de la couche contenant un électrolyte solide selon l'une quelconque des revendications 1 à 4.

7. Méthode de prévention d'un court circuit dans une batterie secondaire tout solide, la méthode comprenant la disposition, entre une électrode positive et une électrode négative, de la couche contenant un électrolyte solide selon l'une quelconque des revendications 1 à 4.

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019199394 A
- JP 2019102301 A

- WO 2017099248 A1

### Non-patent literature cited in the description

- **MELINDA B. GIESELMAN** ; **JOHN R. REYNOLDS**. Poly[(p-phenyleneterephthalamido)propanesulfonate]: a new polyelectrolyte for application to conducting molecular composites. *Macromolecules*, 1990, vol. 23 (12), 3118-3124